# EUROPÄISCHE PATENTSCHRIFT

(11) **EP 0 508 071 B1**
(45) Veröffentlichungstag und Bekanntmachung des Hinweises auf die Patenterteilung: **27.05.1998**
(21) Anmeldenummer: 92102983.1
(22) Anmeldetag: 22.02.1992
(51) Int. Cl.: B29C 47/88, B29C 49/00

(54) **Vorrichtung zur Herstellung von Kunststoff-Rohren**
Apparatus for producing plastic pipes
Dispositif pour la production de tubes plastiques

(30) Priorität: 08.04.1991 DE 4111229
(43) Veröffentlichungstag der Anmeldung: 14.10.1992
(73) Patentinhaber: Hegler, Wilhelm, D-97688 Bad Kissingen (DE)
(72) Erfinder: Hegler, Ralph-Peter, Dr., D-8730 Bad Kissingen (DE); Hegler, Wilhelm, D-8730 Bad Kissingen (DE)
(74) Vertreter: Rau, Manfred, Dr. Dipl.-Ing.

(56) Entgegenhaltungen:
- EP-A- 0 047 378
- EP-A- 0 165 068
- US-A- 4 510 013
- US-A- 4 846 660

## Beschreibung

Die Erfindung betrifft eine Vorrichtung zur Herstellung von Kunststoff-Rohren nach dem Oberbegriff des Anspruches 1.

Eine derartige aus der US-A-4 486 660 bekannte Vorrichtung dient zur Herstellung von Verbundrohren. Hierbei sind in einem Leitungskanal des Spritzkopfes zwei selbsttragende Versorgungs-Leitungen angeordnet, die am - in Produktionsrichtung gesehen - hinteren Ende der Temperierglocke umgebogen sind und stirnseitig an einen Kühlmittel-Vorlaufkanal bzw. einen Kühlmittel-Rücklaufkanal eines Kühlkanals angeschlossen sind. Diese Ausgestaltung mit zwei starren Versorgungs-Rohren ist sehr unflexibel.

Aus der EP-A-0 165 068 ist ein Spritzkopf zum Extrudieren von Rohren bekannt, der einen inneren Leitungs-Kanal aufweist, in dem selbsttragende Versorgungs-Leitungen angeordnet sind, von denen eine Leitung, nämlich eine für Kühlwasser vorgesehene Leitung, aus einem Fluor-Kohlenwasserstoff-Schlauch bestehen kann.

Der Erfindung liegt die Aufgabe zugrunde, eine Vorrichtung der gattungsgemäßen Art so auszugestalten, daß sie einerseits sehr flexibel mit Versorgungs-Leitungen ausgestattet werden kann und daß hierdurch die thermischen Verhältnisse im Spritzkopf nicht nennerswert beeinflußt werden.

Diese Aufgabe wird erfindungsgemäß durch die Merkmale im Kennzeichnungsteil des Anspruches 1 gelöst. Dadurch, daß die Versorgungs-Leitungen als Versorgungs-Schläuche ausgebildet sind, können in sehr einfacher Weise für unterschiedliche Bedürfnisse eine unterschiedliche Zahl von Versorgungs-Schläuchen - auch noch nachträglich - im Leitungskanal untergebracht werden. Die Versorgungs-Schläuche bedürfen keiner besonderen Halterung im Versorgungskanal, so daß sie weitgehend frei liegen mit der Folge, daß sie im wesentlichen von Luft umgeben sind, wodurch bereits eine erste Wärmeisolierung geschaffen wird. Dadurch daß der Leitungskanal durch ein Schutzrohr begrenzt wird, das wiederum zum Spritzkopf hin mit einer Wärmeisolierung versehen ist, werden weitere Wärmeübergangswiderstände geschaffen, so daß die Temperaturverhältnisse im Spritzkopf praktisch nicht beeinflußt werden. Die Wärmeisolierung zwischen Schutzrohr und Spritzkopf wird nach Anspruch 2 bevorzugt durch einen Luftspalt gebildet.

Die erfindungsgemäßen Maßnahmen sind von besonderem Vorteil bei Vorrichtungen, die zur Herstellung von Verbundrohren ausgestaltet sind. Hierbei werden aus dem Spritzkopf zwei Schläuche aus warmplastischem Kunststoff extrudiert, die auf der Formstrecke im Formraum ausgeformt und miteinander verbunden werden. Hierbei ist die Weiterbildung nach Anspruch 3 von besonderem Vorteil, da es zweckmäßig ist, auf der Temperierglocke den ein Innenrohr bildenden Schlauch erst noch zu heizen und erst dann zu kühlen. Es ist hierbei sehr einfach möglich, zwei weitere Versorgungs-Schläuche für den Heiz-Kanal vorzusehen. Weiterhin ist eine Weiterbildung nach Anspruch 4 möglich, wenn nämlich die Temperierglocke noch mit einem Druck-Ausgleichskanal versehen ist. Hierbei kann ein weiterer Versorgungs-Schlauch vorgesehen werden. Nach Anspruch 5 bestehen die Versorgungs-Schläuche bevorzugt aus Polytetrafluorethylen, da dieser Kunststoff temperaturfest ist. Besonders bei einer Ausgestaltung der Vorrichtung, auf der Verbundrohre hergestellt werden und bei der die Versorgung des Spritzkopfes mit nur einem Extruder erfolgt, sind die erfindungsgemäßen Maßnahmen von besonderem Vorteil, wie sich aus den Weiterbildungen nach Anspruch 6 ergibt.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Draufsicht auf eine Vorrichtung zur Herstellung von Kunststoff-Rohren,
- Fig. 2: einen vertikalen Längsschnitt durch den Spritzkopf der Vorrichtung,
- Fig. 3: einen Längsschnitt durch eine am Spritzkopf angebrachte Temperierglocke und
- Fig. 4: eine Teil-Stirnansicht der Temperierglocke gemäß dem Sichtpfeil IV in Fig. 3.

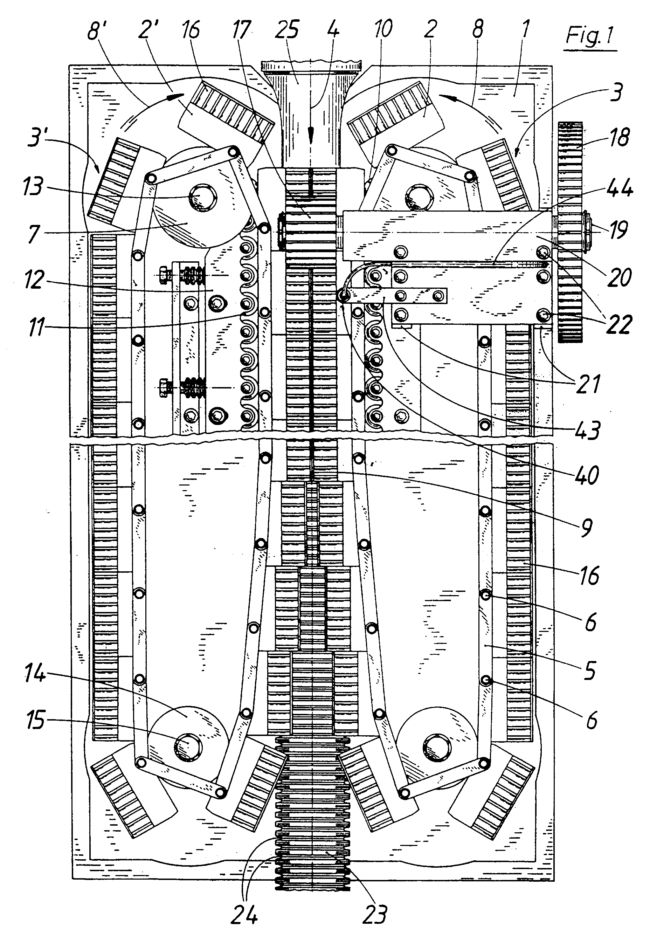

Wie Fig. 1 erkennen läßt, weist eine Vorrichtung zur Herstellung von Kunststoff-Verbundrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3,3' sind an ihrem in Produktionsrichtung 4 gesehen rückwärtigen Ende über als sogenannte Einlaufrollen 7 dienende Umlenkräder geführt. Die einzelnen Halbkokillen 2,2' werden beim Umlauf der Ketten 3,3' entsprechend den Umlaufrichtungspfeilen 8 bzw. 8' in eine Formstrecke 9 eingeschwenkt, in der jeweils zwei Halbkokillen 2,2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2,2' zu einer parallelen und aneinanderliegenden Stellung zu erreichen, sind sogenannte Schließrollen 10 vorgesehen, die die in Produktionsrichtung 4 hinteren Enden der Halbkokillen 2,2' beschleunigt zusammenführen.

In der Formstrecke 9 selber werden die aneinanderliegenden Halbkokillen 2,2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2,2' ist eine Verzahnung 16 ausgebildet, wobei die beiden Verzahnungen 16 der einander paarweise zugeordneten Halbkokillen 2,2' miteinander fluchten, so daß von oben ein gemeinsames Antriebsritzel 17 in diese Verzahnung 16 eingreifen kann, das die Halbkokillen 2,2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23, und zwar sogenannte Verbundrohre, mit unter anderem einer Querprofilierung, d.h. mit über deren Umfang umlaufenden Rillen 24 hergestellt.

Die Rohre 23 werden weiter unten noch genauer beschrieben. Hierzu ist ein Extruder vorgesehen, von dem nur der weiter unten noch genauer zu beschreibende Spritzkopf 25 angedeutet ist. Die bisher beschriebene Vorrichtung ist bekannt, und zwar beispielsweise aus der EP-A 0 065 729 (entsprechend US 4 492 551) und aus der DE 40 21 564.4.

Der Spritzkopf 25 ist mittels Schrauben 26 an einem Anschlußteil 27 des nicht dargestellten Extruders befestigt. Er weist einen im wesentlichen ringförmigen Düsenkörper 28 auf, an dem alle wesentlichen Teile des Spritzkopfes befestigt sind. Dieser Düsenkörper weist konzentrisch zu einer gemeinsamen Mittel-Längs-Achse 29 des Spritzkopfes 25 einen in Produktionsrichtung 4 vorspringenden Ringbund 30 auf. In diesem Ringbund 30 ist mittels einer Innen-Gewinde-Verbindung 31 ein Innen-Düsendorn 32 befestigt. Auf dem Außenumfang des Ringbundes 30 ist mittels einer Außen-Gewinde-Verbindung 33 ein Außen-Düsendorn 34 befestigt. Schließlich ist wiederum konzentrisch zur Achse 29 noch ein Außendüsen-Mantel 35 mittels eines Justierrings 36 und mittels der Schrauben 26 am Düsenkörper 28 befestigt.

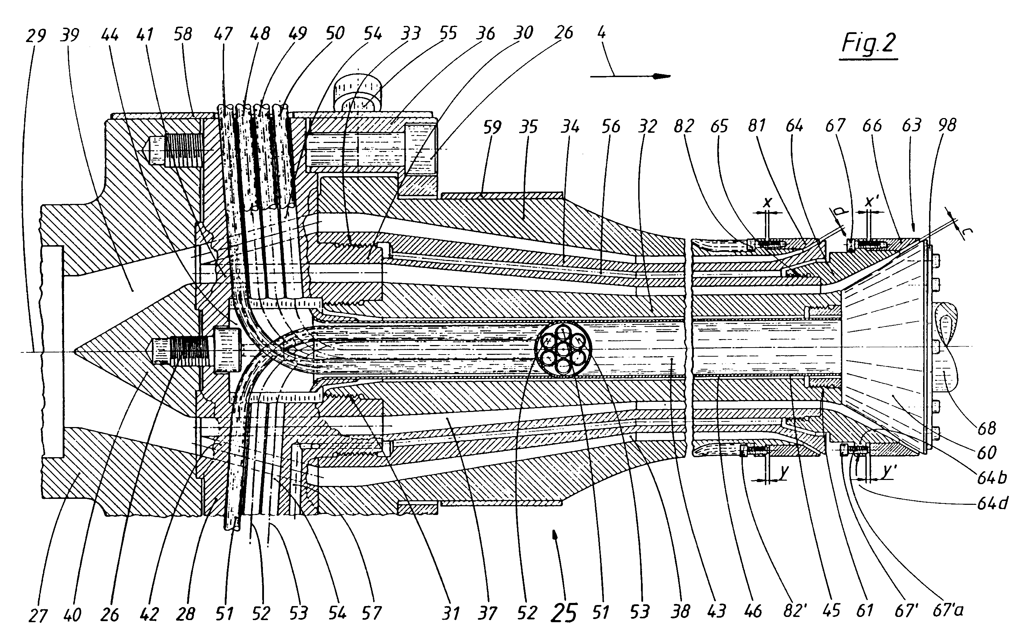

Der Innen-Düsendorn 32 und der Außen-Düsendorn 34 begrenzen zwischen sich einen Innen-Kanal 37, während der Außen-Düsendorn 34 und der Außendüsen-Mantel 35 einen Außen-Kanal 38 zwischen sich begrenzen. Der Innen-Kanal 37 und der Außen-Kanal 38 sind - wie Fig. 2 erkennen läßt - an einen vom Extruder kommenden Spritzkanal 39 angeschlossen. Um einen stetigen Fluß der vom Extruder kommenden Kunststoffschmelze in die Kanäle 37,38 zu erreichen, ist am Düsenkörper 28 ein in den Spritzkanal 39 entgegen der Produktionsrichtung 4 gerichteter Führungskegel 40 angebracht.

Im Düsenkörper 28 ist der Innen-Kanal 37 von sich radial erstreckenden Innen-Stegen 41 und der Außen-Kanal 38 von sich ebenfalls radial zur Achse 29 erstreckenden Außen-Stegen 42 durchsetzt, so daß der Düsenkörper 28 tatsächlich ein Teil ist. Wie Fig. 2 entnehmbar ist, erstreckt sich der Innen-Kanal 37 im Düsenkörper 28 durch den Ringbund 30.

Der Innen-Düsendorn 32 ist mit einem konzentrisch zur Achse 29 verlaufenden Leitungs-Kanal 43 versehen, der in eine Kammer 44 im Düsenkörper 28 mündet. In diesem Leitungs-Kanal 43 ist ein Schutzrohr 45 konzentrisch zur Achse 29 angeordnet, das durch einen Luftspalt 46 zum Innen-Düsendorn 32 isoliert ist. Das Schutzrohr 45 selber besteht aus Stahl.

Durch das Schutzrohr 45 im Leitungs-Kanal 43 sind Versorgungs-Schläuche 47,48,49,50,51,52,53 geführt. Diese sind radial von außen durch den Düsenkörper 28 in dessen Kammer 44 geführt, wozu im Düsenkörper 28 etwa radial verlaufende, bis in die Kammer 44 geführte Bohrungen 54 ausgebildet sind, die selbstverständlich die Außen-Stege 42 und die Innen-Stege 41 durchsetzen, damit die Schläuche 47 bis 53 nicht mit der in den Kanälen 37 bzw. 38 transportierten Schmelze in Berührung kommen. Die Schläuche 47 bis 53 sind aus hochwarmfestem Kunststoff, beispielsweise Polytetrafluorethylen, hergestellt.

Der Außendüsen-Mantel 35 wird mittels im Justierring 36 angebrachter, sich radial zur Achse 29 erstreckender Justierschrauben 55 ausgerichtet und festgelegt. Im Außen-Düsendorn 34 sind weiterhin Gaskanäle 56 ausgebildet, die sich in Produktionsrichtung 4 erstrecken und die an einen Zuführkanal 57 im Düsenkörper 28 angeschlossen sind, der sich etwa radial zur Achse 29 erstreckt und die Stege 42 durchsetzt. Der Spritzkopf 25 ist über einen größeren Teil seiner Länge mit Heizungen 58,59 umgeben, um ein Abkühlen der vom Spritzkanal 39 kommenden, durch die Kanäle 37,38 geführten Schmelze zu vermeiden.

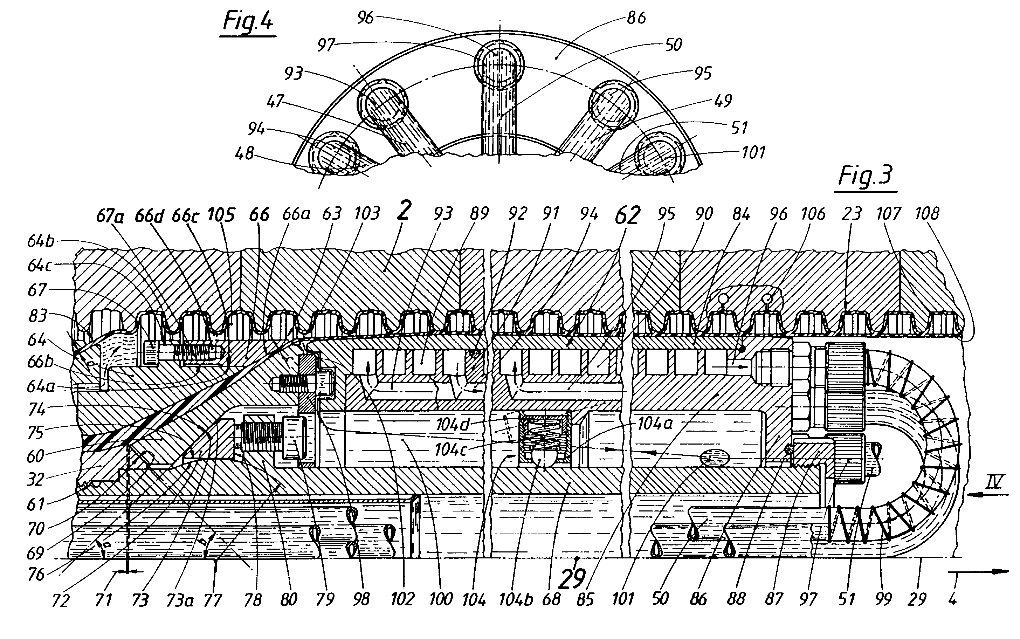

Die Ausgestaltung des Spritzkopfes 25 im Bereich seiner in Fig. 2 rechts dargestellten Düsen wird nachfolgend unter gleichzeitiger Bezugnahme auf Fig. 3 erläutert. Am Innen-Düsendorn 32 ist ein sich in Produktionsrichtung 4 kegelstumpfförmig erweiternder Innendorn-Teller 60 mittels einer Gewindeverbindung 61 angebracht, der einen als Temperierglocke 62 ausgebildeten Innendorn trägt. Dieser Innendorn-Teller 60 begrenzt auf der radial zur Achse 29 innenliegenden Seite eine den Innen-Kanal 37 beendende Innen-Düse 63. Am Außen-Düsendorn ist ein Verlängerungsteil 64 mittels einer Gewindeverbindung 65 angebracht, das den Innendorn-Teller 60 in Produktionsrichtung 4 gesehen teilweise umgibt und so einen erweiterten Bereich des Innen-Kanals 37 auf der Außenseite umgibt, und zwar bis vor die Innen-Düse 63. Diese wird auf der radial außenliegenden Seite mittels eines Innen-Düsenrings 66 umgeben, der auf dem Verlängerungsteil 64 angeordnet ist.

Der Innen-Düsenring 66 ist hülsenförmig ausgebildet und weist eine die Innen-Düse 63 begrenzende, etwa sich in Produktionsrichtung erweiternde kegelstumpfförmige Düsen-Begrenzungsfläche 66a auf. Außerdem weist seine etwa zylindrische Innenfläche an ihrem der Düsen-Begrenzungsfläche 66a abgewandten Ende eine ringförmige Hinterschneidung 66b auf, so daß er nur mit einer zwischen der Hinterschneidung 66b und der Düsen-Begrenzungsfläche 66a ausgebildeten relativ kurzen zylindrischen Anlagefläche 66c auf einer zylindrischen Führungsfläche 64a des Verlängerungsteils 64 des Außen-Düsendorns 34 anliegt und geführt ist. Die Länge der Anlagefläche 66c in Produktionsrichtung 4 ist erheblich geringer als ihr Durchmesser. Am Verlängerungsteil 64 ist im Anschluß an die Führungsfläche 64a ein ringförmig nach außen vorspringendes Widerlager 64b ausgebildet. In diesem sind über den Umfang verteilt abwechselnd Zug-Einstellschrauben 67 und Druck-Einstellschrauben 67' angeordnet. Derartige Einstellschrauben 67,67' sind zweckmäßigerweise in Winkelabständen von 45° über den Umfang vorgesehen, insgesamt also jeweils vier Stück. Die in Fig. 2 und 3 oben dargestellte Zug-Einstellschraube 67 ist in einer Bohrung 64c des Widerlagers 64b geführt und mit einem Gewinde 67a in eine Gewindebohrung 66d des Innen-Düsenrings 66 geschraubt. Mittels dieser Zug-Einstellschraube 67 kann also der Innen-Düsenring 66 zum Widerlager 64b hin gezogen bzw. verspannt werden.

Die nur in Fig. 2 unten dargestellte Druck-Einstellschraube 67' weist ein Gewinde 67'a auf, das in eine Gewindebohrung 64d des Widerlagers 64b geschraubt ist. Mittels dieser Druck-Einstellschraube 67' kann somit der Innen-Düsenring 66 vom Widerlager 64b weg zur Innen-Düse 63 hin gedrückt bzw. verspannt werden. Durch gemeinsame Betätigung der Einstellschrauben 67 und 67' kann somit der Spalt zwischen Widerlager 64b und Innen-Düsenring 66 über seinen Umfang unterschiedliche Weiten x bzw. y erhalten und damit der Innen-Düsenring 66 nicht nur parallel zur Mittel-Längs-Achse 29 unter Einstellung der Weite c der Innen-Düse 63 verstellt werden; er kann auch - wenn auch nur in geringem Umfang - relativ zur Achse 29 verkantet werden, wodurch die Weite c der Innen-Düse 63 über den Umfang unterschiedlich wird. Wegen der kurzen Führung der Anlagefläche 66c auf der Führungsfläche 64a reicht ein Spiel von einigen Hundertstel Millimeter zwischen diesen aus, um Ungleichmäßigkeiten in der Weite c von einigen Zehntel Millimeter über den Umfang der Innen-Düse 63 herbeizuführen. Außerdem ist Stahl als verwendeter Werkstoff auch bei Temperaturen von 180 bis 250°C elastisch verformbar.

Der Innendorn-Teller 60 ist auf einem konzentrisch zur Achse 29 verlaufenden Tragrohr 68 angeordnet, daß mittels der erwähnten Gewindeverbindung 61 mit dem Innen-Düsendorn 32 verbunden ist. Der Innendorn-Teller 60 ist mittels einer Kegelfläche 69 auf einer entsprechenden Kegelsitzfläche 70 am freien Ende des Innen-Düsendorns 32 abgestützt. Auf dieser Kegelsitzfläche 70 kann der Innendorn-Teller 60 relativ zur Achse 29 geringfügig radial verstellt werden, wodurch ein Justierabsatz 71 gebildet werden kann, der auf jeden Fall kleiner als 1 mm, in der Regel nicht größer als 0,5 mm, ist. Zur Verstellung des Innendorn-Tellers 60 ist ein Justier-Kegelring 72 vorgesehen, der mit einer Kegelfläche 73 gegen eine Kegelsitzfläche 74 an der Innenseite des Innendorn-Tellers 60 anliegt. Während die Kegelfläche 69 und die Kegelsitzfläche 70 sich in Produktionsrichtung 4 gesehen verjüngen, erweitern sich die Kegelfläche 73 und die zugeordnete Kegelsitzfläche 74 in Produktionsrichtung 4 gesehen. Der Justier-Kegelring 72 ist mit seiner zylindrischen Innenfläche 75 auf einer kugelringförmigen Führungsfläche 76 geführt, deren Mittelpunkt 77 in der Achse 29 liegt. Gegen eine der Kegelfläche 73 abgewandte Druckfläche 78 des Justier-Kegelrings 72 liegen Druck-Einstellschrauben 79 an, die in Widerlagern 80 verstellbar geführt sind, die wiederum mit dem Tragrohr 68 fest verbunden sind. Durch unterschiedliche Verstellung der Einstellschrauben 79, von denen nur eine dargestellt ist, kann der Justier-Kegelring 72 auf der kugelförmigen Führungsfläche 76 geringfügig verschwenkt werden, so daß der Neigungswinkel a seiner Kegelfläche 73 über den gesamten Umfang des Justier-Kegelrings 72 nicht identisch ist. Dadurch wird der Innendorn-Teller 60 an seiner Abstützung mittels der Kegelfläche 69 auf der Kegelsitzfläche 70 exzentrisch zur Achse 29 verstellt. Damit dies im gewünschten Umfang erfolgt, beträgt die durchschnittliche Neigung der Kegelfläche 73 zur Achse 29 45°; gleichermaßen beträgt die Neigung b der Kegelsitzfläche 70 gegenüber der Achse 29 etwa 45°. Die Kegelfläche 69 und die Kegelsitzfläche 74 sind also unter 90° gegeneinander geneigt. Zur Erleichterung des Verkantens kann die Kegelfläche 73 an ihren Außenbereichen sich über 10 bis 20% ihrer Länge erstreckende Abschrägungen 73a um 1 bis 2° aufweisen, die zeichnerisch nicht darstellbar sind.

Durch Verstellung des Innen-Düsenrings 66 in Richtung der Achse 29 wird die Grund-Weite c der Innen-Düse 63 und in geringem Maße eine über ihren Umfang unterschiedliche Weite c eingestellt. Durch die geschilderte radiale Verstellung des Innendorn-Tellers 60 wird die Weite c der Innen-Düse 63 in größerem Maße über ihren Umfang eingestellt. Hiermit kann also eingestellt werden, daß die Weite c der Innen-Düse 63 über ihren Umfang exakt gleich ist. Andererseits kann hiermit aber auch eingestellt werden, daß sie ungleich ist.

Die Ausgestaltung und Anordnung und Verstellung des Außen-Düsenrings 81 mit seinen Zug-Einstellschrauben 82 und seinen Druck-Einstellschrauben 82' ist völlig gleich zu der des Innen-Düsenrings 66, weshalb auf die dortige Beschreibung verwiesen werden darf. Hiermit kann unter Erzeugung unterschiedlicher Weiten x' und y' die Weite d einer den Außen-Kanal 38 abschließenden Außen-Düse 83 verstellt werden, und zwar mit über den Umfang veränderlicher Weite d.

Die Gaskanäle 56 münden zwischen der Außen-Düse 83 und der in Produktionsrichtung 4 nachgeordneten Innen-Düse 63 aus dem Spritzkopf 25 aus. Die Temperierglocke 62 weist einen in üblicher Weise ausgestalteten, im wesentlichen zylindrischen Kalibrierzylinder 84 auf. Dieser ist auf einem Temperierzylinder 85 angeordnet, der mittels eines Flansches 86 auf dem Tragrohr 68 mit einem Spiel von 1 bis 2 mm gelagert ist.

Der Temperierzylinder 85 ist auf dem Tragrohr 68 mittels einer Verschraubung 87 gehalten und axial in Produktionsrichtung 4 justierbar. Eine Abdichtung ist mittels einer Dichtung 88 erreicht. Der Temperierzylinder 85 ist auf seinem Außenumfang mit einem Heiz-Kanal 89 und einem Kühl-Kanal 90 versehen. Beide Kanäle 89,90 verlaufen schraubenlinienförmig auf dem Außenumfang des Temperierzylinders und sind nach außen durch den Kalibrierzylinder 84 abgedeckt. In Produktionsrichtung 4 gesehen kommt unmittelbar hinter der Innen-Düse 63 zuerst der Heiz-Kanal 89, dem der Kühl-Kanal 90 nachgeordnet ist. Die beiden schraubenlinienförmig verlaufenden Kanäle 89,90 sind durch eine ringstegartige Wand 91 voneinander getrennt, die mit einer Dichtung 92 gegen den Kalibrierzylinder 84 anliegt.

Der Heiz-Kanal 89 ist mittels eines im Temperierzylinder 85 parallel zur Achse 29 verlaufenden Heizmittel-Vorlaufkanals 93 mit dem Versorgungs-Schlauch 47 verbunden, durch den Heizmedium zugeführt wird. Dieser Vorlaufkanal 93 mündet - wie Fig. 3 entnehmbar ist - benachbart zum Innendorn-Teller 60 in den Heiz-Kanal 89. Das Heizmittel durchströmt diesen Heiz-Kanal 89 schraubenlinienförmig in Produktionsrichtung 4 und verläßt ihn durch einen Heizmittel-Rücklaufkanal 94, der parallel zum Vorlaufkanal 93 im Temperierzylinder 85 ausgebildet ist. Das abgekühlte Heizmittel strömt zum Versorgungs-Schlauch 48. Für den Kühl-Kanal 90 gilt entsprechend, daß benachbart zur Wand 91 ein Kühlmittel-Vorlaufkanal 95 in den Kühlkanal 90 einmündet. Das Kühlmedium durchströmt den Kühl-Kanal 90 schraubenlinienförmig in Produktionsrichtung 4 und verläßt diesen durch einen Kühlmittel-Rücklaufkanal 96. Die Kühlmittel-Zufuhr erfolgt durch den Versorgungs-Schlauch 49, während der Rücklauf durch den Versorgungs-Schlauch 50 erfolgt. Die Versorgungs-Schläuche 47 bis 50 sind mittels üblicher Schraubverbindungen 97 an der Stirnseite des Flansches 86 befestigt.

Zwischen der Temperierglocke 62 und dem Innendorn-Teller 60 ist eine Wärmeisolierung 98 angeordnet. Wie Fig. 3 entnehmbar ist, können die Versorgungs-Schläuche 47 bis 53 insbesondee in dem stark gebogenen Bereich vor der jeweiligen Schraubverbindung 97 mittels einer Schraubenfeder 99 umgeben sein.

Der Temperierzylinder 85 ist hohl ausgebildet und weist in seinem Innenraum einen das Tragrohr 68 umgebenden Ausgleichsraum 100 auf. Dieser Ausgleichsraum 100 ist über einen Ausgleichskanal 101 mit dem Versorgungs-Schlauch 51 verbunden, der zum Unter- und Überdruckausgleich mit der Atmosphäre verbunden ist. Der Ausgleichsraum 100 ist über einen in der Trennfläche zwischen dem Innendorn-Teller 60 und der Temperaturglocke 62 ausgebildeten Ausgleichsspalt 102 mit dem Formraum 103 verbunden, der zwischen den Halbkokillen 2 bzw. 2' und dem Spritzkopf 25 mit Temperierglocke 62 ausgebildet ist. Der Ausgleichsspalt 102 mündet - in Produktionsrichtung 4 gesehen - unmittelbar hinter der Innen-Düse 63 in den Formraum 103. Im Ausgleichsraum 100 sind über dessen Umfang gleichmäßig verteilt mehrere federnde Radiallager 104 angeordnet. Jedes Radiallager 104 stützt sich mit einem Lagergehäuse 104a gegen die Innenwand des Temperierzylinders 85 ab, und zwar in dessen Schwerpunktebene. Gegen das Tragrohr 68 stützt es sich mittels einer Kugel 104b ab. Diese liegt wiederum gegen eine Druckfeder 104c an, die sich gegen ein im Lagergehäuse 104a verstellbares Widerlager 104d abstützt.

Die beiden weiteren Versorgungs-Schläuche 52,53 können für weitere Versorgungsaufgaben, beispielsweise die Zuführung von Druckluft oder Trennmittel, vorgesehen sein.

Wie Fig. 3 erkennen läßt, sind in den Halbkokillen, von denen nur die Halbkokillen 2 dargestellt sind, ringförmige Formausnehmungen 105 ausgebildet, die in bekannter Weise an Teilvakuum-Kanäle 106 angeschlossen sind.

Die nur in Fig. 3 angedeutete, vom Extruder durch den Spritzkanal 39 zugeführte Kunststoffschmelze strömt zum Teil durch den Außen-Kanal 38 zur Außen-Düse 83, aus der ein Schlauch extrudiert wird, der sich unter Formung eines mit den Querrillen 24 versehenen Schlauches aufgrund des Teilvakuums in die Formausnehmungen 105 legt. Er bildet das Außenrohr 107 des Rohres 23.

Ein anderer Teil der Schmelze strömt durch den Innen-Kanal 37 zur Innen-Düse 63, aus der ein weiterer Schlauch austritt, der auf den Kalibrierzylinder 84 gelangt. Dieser erweitert sich von der Innen-Düse 63 in Produktionsrichtung 4 leicht nach außen, bis dieser Schlauch in der in Fig. 3 dargestellten Weise gegen die Wellentäler des Außenrohres 107 gelangt und hier mit diesen verschweißt wird. Durch die schwimmende Lagerung des Temperierzylinders 85 aufgrund der Abstützung über federnde Radiallager 104 wird erreicht, daß auf den das Innenrohr 108 bildenden Schlauch über den gesamten Umfang des Kalibrierzylinders 84 gleiche Kräfte ausgeübt werden, so daß eine gleichmäßige Verschweißung mit dem das Außenrohr 107 bildenden Schlauch erfolgt. In diesem geschilderten Bereich ist die Temperierglocke 62 noch beheizt, so daß der Kunststoff noch plastisch ist. Auf dem weiteren Weg in Produktionsrichtung 4 wird dann insbesondere der das glatte Innenrohr 108 bildende Schlauch abgekühlt. Der das Außenrohr 107 bildende Schlauch wird ebenfalls durch in den Halbkokillen 2 bzw. 2' befindliche Kühleinrichtungen, die in der Zeichnung nicht dargestellt sind, gekühlt.

## Patentansprüche

1. Vorrichtung zur Herstellung von Kunststoff-Rohren (23) bei der mit einer Formausnehmung (105) versehene, sich auf einer Formstrecke (9) jeweils paarweise zu einer Form mit einer Mittel-Längs-Achse (29) ergänzende Halbkokillen (2,2') auf einem Maschinentisch (1) im Kreislauf in Produktionsrichtung (4) geführt angeordnet sind, wobei der Formstrecke (9) ein Spritzkopf (25) eines Extruders vorgeordnet ist, wobei der Spritzkopf (25) an seinem in Produktionsrichtung (4) hinten liegenden Ende mit einer Temperierglocke (62) versehen ist, die mit einem Kühl-Kanal (90) versehen ist, wobei der Spritzkopf (25) mit einem konzentrisch zur Mittel-Längs-Achse (29) verlaufenden, auch die Temperierglocke (62) durchsetzenden Leitungs-Kanal (43) versehen ist und wobei im Leitungs-Kanal (43) zwei an den Kühl-Kanal (90) angeschlossene Versorgungs-Leitungen angeordnet sind, dadurch gekennzeichnet, daß die Versorgungs-Leitungen als flexible Versorgungs-Schläuche (49,50) aus temperaturfestem Kunststoff ausgebildet sind und daß der Leitungs-Kanal (43) mit einem die Versorgungs-Schläuche (49,50) aufnehmenden Schutzrohr (45) versehen ist, das gegenüber dem Spritzkopf (25) mit einer Wärme-Isolierung versehen ist.

2. Vorrichtung nach Anspruch 1, dadurch gekennzeichnet, daß zwischen dem Schutzrohr (45) und dem Spritzkopf (25) ein Luftspalt (46) als Wärmeisolierung vorgesehen ist.

3. Vorrichtung nach Anspruch 1 oder 2, dadurch gekennzeichnet, daß die Temperierglocke (62) mit einem dem Kühl-Kanal (90) in Produktionsrichtung (4) vorgeordneten Heiz-Kanal (89) versehen ist und daß im Leitungs-Kanal (43) zwei weitere an den Heiz-Kanal (89) angeschlossene flexible Versorgungs-Schläuche (47,48) angeordnet sind.

4. Vorrichtung nach einem der Ansprüche 1 bis 3, dadurch gekennzeichnet, daß die Temperierglocke (62) mit einem in den Formraum (103) mündenden Druck-Ausgleichskanal (101) versehen ist, der an einen weiteren Versorgungs-Schlauch (51) im Leitungs-Kanal (43) angeschlossen ist.

5. Vorrichtung nach einem der Ansprüche 1 bis 4, dadurch gekennzeichnet, daß die Versorgungs-Schläuche (47 bis 51) aus Polytetrafluorethylen bestehen.

6. Vorrichtung nach einem der Ansprüche 1 bis 5, dadurch gekennzeichnet, daß der Spritzkopf (25) einen tragringartigen Düsenkörper (28) aufweist, der mit einen Innen-Kanal (37) und einen konzentrisch hierzu verlaufenden Außen-Kanal (38) durchsetzenden Innen-Stegen (41) und Außen-Stegen (42) versehen ist, die sich radial zur Mittel-Längs-Achse (29) erstreckend ausgebildet sind, und daß im Düsenkörper (28) sich etwa radial erstreckende, mindestens einen Innen-Steg (41) und einen hierzu radial fluchtenden Außen-Steg (42) durchsetzende Bohrungen ausgebildet sind, durch die jeweils ein Versorgungs-Schlauch (47 bis 53) geführt ist.

7. Vorrichtung nach Anspruch 6, dadurch gekennzeichnet, daß der Spritzkopf (25) zum Anschluß an nur einen Extruder ausgebildet ist.

## Claims

1. Apparatus for the production of plastic pipes (23) having half shells (2, 2'), which are provided with a mold recess (105) and of which two at a time combine as a pair on a molding path (9) to form a mold with a central longitudinal axis (29), arranged on a machine bed (1) to be circuit-guided in the direction (4) of production, an injection head (25) of an extruder being arranged upstream of the molding path (9), the injection head (25) being provided at its rear end seen in the direction (4) of production with a temperature-regulating bell (62), which is provided with a cooling channel (90), the injection head (25) being provided with a line conduit (43) extending concentrically of the central longitudinal axis (29) and also passing through the temperature-regulating bell (62) and two supply lines connected to the cooling channel (90) being arranged in the line conduit (43), characterized in that the supply lines are formed as flexible supply hoses (49, 50) of temperature-resistant plastic material and in that the line conduit (43) is provided with a protecting tube (45), which accommodates the supply hoses (49, 50) and which is provided with a heat insulation towards the injection head (25).

2. Apparatus according to claim 1, characterized in that an air gap (46) is provided as a heat insulation between the protecting tube (45) and the injection head (25).

3. Apparatus according to claim 1 or 2, characterized in that the temperature-regulating bell (62) is provided with a heating channel (89) arranged upstream of the cooling channel (90) seen in the direction (4) of production and in that two further flexible supply hoses (47, 48) connected to the heating channel (89) are arranged in the line conduit (43).

4. Apparatus according to one of the claims 1 to 3, characterized in that the temperature-regulating bell (62) is provided with a pressure compensation channel (101) opening into the mold space (103) and which is connected to a further supply hose (51) in the line conduit (43).

5. Apparatus according to one of the claims 1 to 4, characterized in that the supply hoses (47 to 51) consist of polytetrafluorethylene.

6. Apparatus according to one of the claims 1 to 5, characterized in that the injection head (25) has a ring-support-type nozzle body (28) provided with internal webs (41) and external webs (42), which intersperse an internal channel (37) and an external channel (38) extending concentrically of the latter and which are formed to extend radially of the central longitudinal axis (29), and in that bores are formed in the nozzle body (28), which extend about radially and which intersperse at least one internal web (41) and an external web (42) in radial alignment with the latter and through which in each case one supply hose (47 to 53) is piloted.

7. Apparatus according to claim 6, characterized in that the injection head (25) is formed for connection to only one extruder.

## Revendications

1. Dispositif pour fabriquer des tubes en matière plastique (23), dans lequel des demi-coquilles (2,2'), qui sont pourvues d'un évidement de moule (105) et se complètent respectivement par couples, dans une section de moule (9), pour former un moule possédant un axe médian longitudinal (29), sont disposées sur une table de machine (1) en étant guidées en circulation dans le dispositif de production (4), et dans lequel une tête d'injection (25) d'une extrudeuse est disposée en amont de la section de moule (9), la tête d'injection (25) comporte, au niveau de son extrémité située en arrière dans la direction de production (4), une cloche de mise en température (62) qui comporte un canal de refroidissement (90), la tête d'injection (25) est pourvue d'un conduit (43) à canalisations, qui s'étend concentriquement par rapport à l'axe médian longitudinal (29) et traverse également la cloche de mise en température (62), et dans lequel deux canalisations d'alimentation raccordées au canal de refroidissement (90) sont disposées dans le conduit (43) à canalisations, caractérisé en ce que les canalisations d'alimentation sont agencées sous la forme de tuyaux souples d'alimentation (49,50) formés d'une matière plastique résistant à la température et que le conduit (43) à canalisations est pourvu d'un tube de protection (45), qui loge les tuyaux d'alimentation (49,50) et qui comporte un isolant thermique en vis-à-vis de la tête d'injection (25).

2. Dispositif selon la revendication 1, caractérisé en ce qu'une fente d'air (46) est prévue en tant qu'isolant thermique entre le tube de protection (45) et la tête d'injection (25).

3. Dispositif selon l'une des revendications 1 ou 2, caractérisé en ce que la cloche de mise en température (62) comporte un canal de chauffage (89), qui est disposé en amont du canal de refroidissement (90) dans la direction de production (4), et que deux autres tuyaux souples d'alimentation (47,48), qui sont raccordés au canal de chauffage (89), sont disposés dans le conduit (43) à canalisations.

4. Dispositif selon l'une des revendications 1 à 3, caractérisé en ce que la cloche de mise en température (62) est pourvue d'un canal de compensation de pression (101), qui débouche dans la cavité de moule (103) et est raccordé à un autre tuyau d'alimentation (51) dans le conduit (43) à canalisations.

5. Dispositif selon l'une des revendications 1 à 4, caractérisé en ce que les tuyaux d'alimentation (47 à 51) sont formés de polytétrafluoroéthylène.

6. Dispositif selon l'une des revendications 1 à 5, caractérisé en ce que la tête d'injection (25) possède un corps de buse (28) en forme d'anneau de support, qui comporte des barrettes intérieures (41) et des barrettes extérieures (42), qui traversent un canal intérieur (37) et un canal extérieur (38) qui est disposé concentriquement au précédent, ces canaux étant agencés de manière à s'étendre radialement par rapport à l'axe médian longitudinal (29), et que dans le corps de buse (28) sont formés des perçages approximativement radiaux, qui traversent au moins une barrette intérieure (41) et une barrette extérieure (42) alignée radialement avec la précédente et dans lesquels est guidé respectivement un tuyau d'alimentation (47 à 53).

7. Dispositif selon la revendication 6, caractérisé en ce que la tête d'injection (25) est agencée de manière à se raccorder à une seule extrudeuse.
